# EUROPEAN PATENT SPECIFICATION

(11) **EP 3 160 001 B1**
(45) Date of publication and mention of the grant of the patent: **12.12.2018**
(21) Application number: 15191172.4
(22) Date of filing: 23.10.2015
(51) Int. Cl.: H02J 7/00

(54) **SUPPLYING ELECTRICAL POWER**
STROMVERSORGUNG
ALIMENTATION EN ÉNERGIE ÉLECTRIQUE

(43) Date of publication of application: 26.04.2017
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(56) References cited:
- US-A- 5 629 608
- US-A1- 2002 125 869
- US-A1- 2002 125 871
- US-A1- 2010 079 126
- US-A1- 2011 221 604
- US-A1- 2013 128 635
- US-A1- 2014 362 480
- US-A1- 2015 138 853

## Description

### TECHNICAL FIELD

The invention relates to an electrical power supply device and a method for supplying electrical power to an electric load.

### BACKGROUND

Although applicable to any system that uses electrical power which is converted from one type of electrical power to another, like alternating current to direct current, or from one voltage level to another, the present invention will primarily be described in conjunction with USB devices. Nevertheless, the present invention can e.g. be applied to charging stations for electrical vehicles or the like.

The standard charging method for mobile devices like smartphones is charging via the USB port. The standard voltage of a USB port is 5 Volts. This means that the maximum power which can be transferred via a standard conforming USB 2.0 port is 2.5W with 500mA at 5V. There exist some USB chargers which can provide more current, like 1A, 1,5A or 2A. But increasing the current over the USB connectors and cables exceeds the maximum values specified for the cables and connectors by the USB standard.

Therefore, systems have been provided which can charge the battery e.g. of a mobile phone based on a voltage which is higher than the 5V of the USB standard. For example in EP2897249 A1 a charging module, which is installed inside the portable device, can be used with a charger which supplies a voltage higher than 5V. But the system of EP2897249 A1 is complex and has to be installed in every single load device.

Document US 2010 / 0 079 126 A1 discloses a dual loop DC-to-DC converter where the duty cycle for the converter is selected based on the lower one of an output voltage or an input voltage compared to a given threshold value. Document US 2002 / 0 125 871 A1 discloses a power supply with a droop circuit. Document US 2015 / 0 138 853 A1 discloses a power supply with an under-voltage protection for a power supply.

Accordingly, there is a need for a system which allows providing high power to electrical devices with reduced complexity.

Accordingly, there is a need for a system which allows providing high power to electrical devices with reduced complexity.

### SUMMARY

The present invention provides an electrical power supply device with the features of claim 1 and a method with the features of claim 7.

Therefore an electrical power supply device is provided, comprising a controllable power converter, with a power input which is connectable to a power source and with a power output, wherein the power converter is configured to controllably provide electrical power at one of a number, i.e. two or more, of different electrical voltage levels via the power output, and a controller, which is coupled to the power output and configured to monitor the voltage at the power output, wherein if the monitored voltage drops below a predetermined voltage threshold for the present voltage level the controller is configured to control the power converter to provide the electrical power at the next higher voltage level.

Furthermore a method for supplying electrical power to an electric load is provided, the method comprising the steps of providing electrical power to the electric load at a first of a number of different electrical voltage levels, monitoring the voltage of the provided electrical power, and providing the electrical power at the next higher voltage level if the monitored voltage drops below a predetermined threshold for the present voltage level.

The present invention is based on the knowledge that power converters have a maximum output current they can provide at a given voltage level. If the current demand rises above said maximum output current, the output voltage of the power converter drops. Furthermore, the power which can be transmitted at a certain voltage level over a transmission line is limited by the current carrying capability of the cables and connectors and the electrical losses caused by electrical resistances of the cables and the connectors in the transmission line. Therefore, electrical losses, and voltage drops, in the transmission line increase if the current over the transmission line increases.

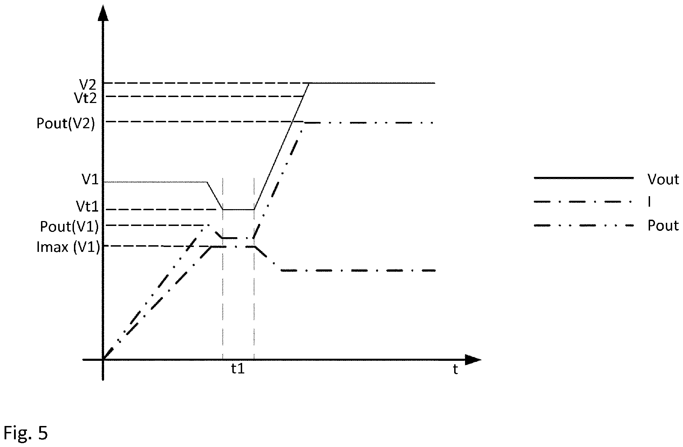

The electrical power supply device of the present invention takes into account this knowledge. Instead of increasing the current over the transmission line or limiting the provided electrical power, the electrical power supply device allows dynamically and automatically changing the voltage level at which the electrical power is provided. This allows increasing the transmitted electrical power without further increasing the current over the transmission line or even reducing the current over the transmission line (see Fig. 5). Especially if the current is reduced the electrical losses and voltage drops over the transmission line can also be reduced.

The power source can be any type of alternating current or direct current power source. The power source can for example be a mains power outlet to which the electrical power supply device is connected. But any other power source like batteries, solar cells, fuel cells or the like can also be used.

The controllable power converter can be a variable or multiple voltage converter. Architectures like a flyback converter, a half-bridge converter or similar can be used in the power converter. This means that the power converter can controllably convert electrical power which he receives from the power supply into electrical power at the power output at different voltage levels. If in one exemplary application the electrical power supply device is a USB charger, the power converter could be configured to provide electrical power e.g. at 5 Volts, at 12 Volts and at 20 Volts. If the power converter is a variable power converter the different voltage levels can also be a continuous voltage level between a minimum voltage and a maximum voltage.

After initiation of an electrical power transfer to any electrical load the power converter can start providing electrical power at the lowest voltage level, in the above example at 5 Volts. Should the power drawn by the load surpass the maximum power which the power converter can provide at 5 Volts, the voltage at the power output will start dropping below 5 Volts.

The output voltage of the power converter is monitored by the controller, which in turn controls the power converter based on the monitored voltage. Therefore, if the power converter detects a drop of the output voltage of the power converter, it will control the power converter to increase the output voltage to the next higher voltage level. This will allow the power converter to provide a higher output power without increasing the output current any further.

The following table shows exemplary voltage levels that can be provided by the electrical power supply device of the present invention:

| Regulated Output Voltage Vout | Maximum Current | Maximum Power available | Power needed by load | Action with time delay |
|---|---|---|---|---|
| V1 | Imax(1) | Pout(1) = V1 *Imax(1) | P1 | If P1 ≤ Pout(1), Vout = V1 |
| | | | | If P1 > Pout(1), Vout = V2 |
| V2 | Imax(2) | Pout(2) = V2*Imax(2) | P2 | If P2 ≤ Pout(2), Vout = V2 |
| | | | | If P2 > Pout(2), Vout = V3 |
| ... | ... | ... | ... | |
| Vn | Imax(n) | Pout(n) = V1 *Imax(n) | Pn | |

Wherein V1 - Vn are the voltage levels, Imax(n) is the maximum current at the respective voltage level, P1 is the power demanded by the load, and Vout is the output voltage of the power converter.

An exemplary table for the two merely exemplary voltages V1 = 5V and V2 = 12V and a load, which increases the power demand from 8W to 12W reads as follows:

| Regulated Output Voltage Vout | Maximum Current | Maximum Power available | Power needed by load | Action with time delay |
|---|---|---|---|---|
| 5V | 2A | Pout(1) = 10W | 8W | Vout= 5V, I = 1,6A |
| 5V | 2A | Pout(1) = 10W | 12W | Vout= 5V, I = 2A |
| 12V | 2A | Pout(2) = 24W | 12W | Vout= 12V, I = 1A |

Summing up, the present invention provides an electrical power supply device, which can provide an increased amount of electrical power by automatically increasing the voltage at which the output power is provided. By providing the controller the present inventions further makes obsolete using a separate data communication between the load and the electrical power supply.

Further embodiments of the present invention are subject of the further subclaims and of the following description, referring to the drawings.

In one embodiment the controller can comprise a voltage sensor. The voltage sensor can e.g. be implemented as an analogue to digital converter input (ADC) of the controller. Further, the voltage sensor can e.g. comprise a voltage divider or the like. The voltage divider can be used to scale the measured voltage. This allows monitoring the voltage even when the voltage surpasses the voltage limits of the controller. For example, if a 5 Volt based controller is used the input voltage for the ADC port is usually limited to 5V. If a maximum voltage level of e.g. 12 Volts or 20 Volts is to be monitored the voltage divider can be used to scale the 12 Volts or 20 Volts down to a maximum of 5 Volts. In one embodiment the controller can comprise discrete logic elements like comparators and delay blocks. In such an embodiment the voltage sensor can e.g. be embodied by one of the comparators which has an input connected to a positive output terminal of the power converter. A common ground of the comparator and the power converter can serve as a common basis for the comparator.

A voltage drop of the output of the power converter can not only be caused by an excessive power consumption of the attached load. Several other temporal disturbances, like a varying mains power or the like, can also cause such a voltage drop. Therefore, in one further embodiment the controller can comprise a current sensor configured to measure the current of the electrical power, and the controller can be configured to control the power converter to provide the electrical power at the next higher voltage level only if the measured current is within a predetermined range of a maximum current value. If in addition to a voltage the current is measured, the controller can determine the exact power which is drawn by the load from the electrical power supply device. Therefore, the controller can determine if the power converter is working at its maximum power limit for a given voltage level and only then issue the command to increase the voltage level.

In another embodiment the controller can be configured to control the power converter to switch back to a previous lower voltage level and provide the electrical power at the lover voltage level if the measured current decreases below a predetermined threshold value. This allows maintaining the voltage level as near as possible to the lowest voltage level which regularly will be the standard voltage level of an application in which the electrical power supply devices is used.

A plurality of modern electrical devices, like e.g. mobile phones or tablet PCs, comprise charging controllers, which are capable of transforming a wide range of input voltages into a charging voltage for the battery of the respective device. Therefore, after a switch of the voltage level to a higher voltage level such charging controllers will consume the same amount of electrical power before rising the power consumption. Therefore, with the higher voltage the current will at first drop. The charging controller will detect that drop in current and increase the total power drawn from the electrical power supply device, which will result in an increase in current. But, if the device connected to the electrical power supply device doesn't comprise such a charging controller, the current will instantly increase and eventually damage the respective device. Therefore, in one further embodiment the electrical power supply device can comprise a protection device, which is configured to at least temporarily shut down the power converter if after a change to a higher voltage level the measured current increases instantly. The protection device therefore allows using the electrical power supply device with any electrical load that can be connected to the electrical power supply device. If the respective load or device is capable of working with increased voltage levels the protection device will detect a short current drop and then an increase in current drawn from the electrical power source. If the protection device detects such a pattern, it will not shut down the power converter. But if instead of detecting such a pattern the protection device detects an immediate increase in current after the voltage level is increased, the protection device will at least temporarily shut down the power converter. In one embodiment the protection device can instead of shutting down the power converter set the power converter to provide power at the lowest voltage level, which will usually represent the standard voltage of a given application. If the electrical power supply device is a USB charger that voltage level will e.g. be 5 Volts.

As already explained above, voltage drops of the output of the power converter can not only be caused by an excessive power consumption of the attached load. Therefore, in one further embodiment the controller can comprise a delay timer, which is configured to measure a predetermined time span after the voltage drops below the predetermined threshold, wherein the controller is configured to control the power converter to provide the electrical power at the next higher voltage level only if the monitored voltage drops below the predetermined threshold for the present voltage level during the complete time span. By delaying the switch from one voltage level to another voltage level short disturbances for example of the mains power can be bridged and therefore don't lead to an unnecessary switching of the voltage level. The predetermined time span can be determined depending on the respective application and the theoretically expected disturbances. Exemplary time spans can range from 5ms to 100ms, especially from 10ms to 50ms, 15ms to 30ms, or an exact value like 20ms.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an electrical power supply device according to the present invention,
Fig. 2 shows a block diagram of another embodiment of an electrical power supply device according to the present invention,
Fig. 3 shows a flow diagram of an embodiment of a method according to the present invention regarding Fig.1,
Fig. 4 shows a flow diagram of another embodiment of a method according to the present invention regarding Fig.2, and
Fig. 5 shows a voltage diagram which results of using an embodiment of an electrical power supply device according to the present invention.

In the figures like reference signs denote like elements unless stated otherwise.

### DETAILED DESCRIPTION OF THE DRAWINGS

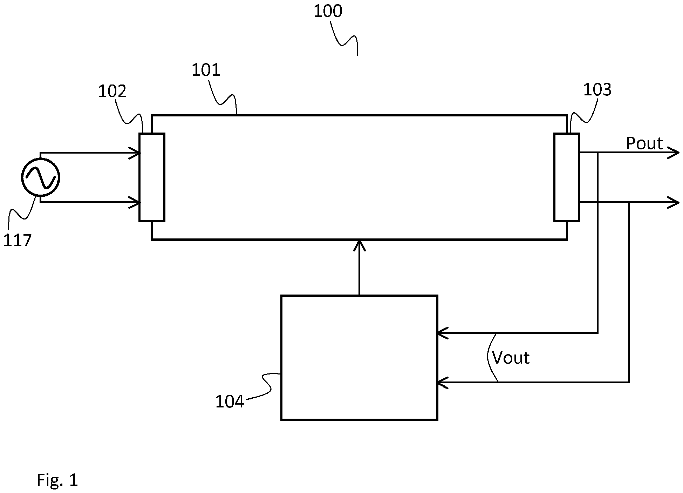

Fig. 1 shows the electrical power supply device 100 comprising the controllable power converter 101. The power converter 101 connects to a mains power outlet 117 via a power input 102. The power input 102 can e.g. be a simple cable connection to the power outlet 117.

The power converter 101 is a Flyback converter and transforms the electrical power provided by the power outlet 117 as alternating current, AC, electrical power into a direct current, DC, electrical power at the power output 103. The power converter 101 is controllable in such a way that the output voltage Vout with which the electrical power Pout is provided at the power output 103 can be varied. The power converter 101 can provide the electrical power Pout at two different voltage levels V1 = 5V and V2 = 12V (see Fig. 5). It is to be noted, that the Flyback converter 101 with two voltage levels V1, and V2 is just exemplary and that any other fitting converter type can be used and any arbitrary number of voltage levels, e.g. 5V, 12V and 20V, is possible.

In an initial stage, i.e. after the power converter 101 is powered up or booted, the power converter 101 will provide the electrical power Pout at the first voltage level V1 = 5V.

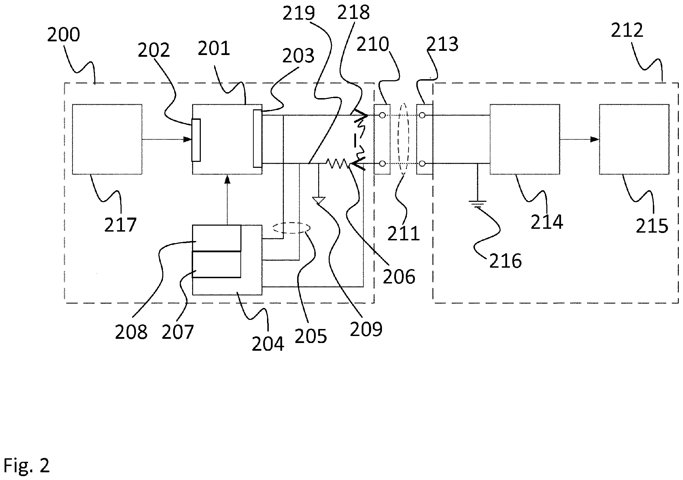

The power output 103 is connected to a controller 104, which is configured to monitor the voltage Vout at the power output 103, i.e. the voltage Vout at which the output power Pout is provided e.g. to a load 212 (see Fig. 2) by the power converter 101.

The controller 104 is configured to detect if the output voltage Vout falls below a given voltage threshold Vt1 (see Fig. 5) for the first voltage level V1. For the first voltage level V1 = 5V the voltage threshold can e.g. be 0,1V, or 0,2V, or 0,3V, or 0,4V, or 0,5V below 5V, i.e. 4,9V, or 4,8V, or 4,7V, or 4,6V, or 4,5V, or any other value which is suited for the specific application. If for example an electrical power supply device according to the present invention is used in a charging station for an electric vehicle, the voltage levels can be 280V, 350V and 400V or the like. In such an application, the voltage threshold can be in the range of 1V or several volts, or up to 10V, or 20V below the respective voltage level.

In case the controller 104 detects that the output voltage Vout is below the voltage threshold Vt1, it controls the power converter 101 to switch to the next voltage level V2 = 12V. This means that the power converter 101 will continue to provide the output power Pout at a voltage of 12V.

Optionally, if the electrical power Pout drawn by the attached load 212 decreases below a predetermined value the controller 104 can control the power converter 101 to switch back to a previous lower voltage level V1 and provide the electrical power Pout at the lover voltage level V1.

Fig. 2 shows the electrical power supply device 200, which is based on the electrical power supply device 100, and which adds further elements to the electrical power supply device 100.

As in Fig. 1 the electrical power supply device 200 comprises a power converter 201, which is coupled via a power input 202 with a mains power supply 217. Two power lines 218, 219 couple the power output 203 of the power converter 201 with a connector 210.

The electrical power supply device 200 couples to a load 212 via a cable 211 and a connector 213 of the load 212. The load 212 comprises a charging controller 214, which is capable of converting a range of input voltages to a voltage adequate for charging the battery 215. Furthermore, the load 212 comprises a common ground 216 for the charging controller 214 and the battery 215. The load 212 can e.g. be a smartphone or the like.

In the electrical power supply device 200 the controller 204 couples to the powerlines 218, 219 via taps and comprises a voltage sensor 205 and a current sensor 206. The voltage sensor 205 and the current sensor 206 are depicted as a dashed circle and a resistance, respectively. It is to be understood, that any type of voltage sensor and current sensor can be used with the present invention. Therefore, for every application the most adequate types of sensors can be chosen. The current sensor can e.g. be embodied as a shunt resistance in some applications. Just as an example, the current sensor can also be embodied as a contact-less magnetic field based sensor or the like, e.g. in high current application.

The controller 204 of Fig. 2 basically provides the same function as the controller 104 of Fig. 1, it controls the power converter 201 to switch from one voltage level V1, V2 to another voltage level V1, V2. However, in contrast to the controller 104, the controller 204 comprises a delay timer 208. The delay timer 208 will count or wait a given time span t1 (see Fig. 5) after the output voltage Vout drops below the voltage threshold Vt1, Vt2. The controller 204 will only control the power converter 201 to switch the power level, if the output voltage Vout is still below the voltage threshold Vt1, Vt2 after the time span t1.

The controller 204 furthermore comprises a protection device 207, which protects loads 212 connected to the electrical power supply device 200 that do not support higher output voltages Vout. The protection device 207 monitors the current I of the power lines 219, 218. As already explained above, if a load 212 supports higher voltages Vout than the applications standard voltage, after a change to a higher voltage level V1, V2 the current I will drop for a short time. However, if after a change to a higher voltage level V1, V2 the current I raises instantly, chances are high that the connected load 212 does not support the higher output voltages Vout. Therefore, the higher output voltage Vout will damage the load 212.

The protection device 207 therefore monitors the current I after a change of the voltage level V1, V2. If the protection device 207 detects a sudden or immediate raise of the current I after such a change, it turns off the power converter 201. The power converter 201 can be turned off permanently, that is to say until the power converter 201 is disconnected from the mains power supply 217 and plugged in again. Alternatively, the power converter 201 can be turned off only temporarily.

As a further alternative, instead of turning off the power converter 201 the protection device 207 can control the power converter 201 to return to the last voltage level V1, V2 that was supported by the load 212. The controller 204 may also initiate this returning to the last voltage level V1 after the power converter 201 has been turned off for a specific amount of time.

Finally, the electrical power supply device 200 comprises a common ground 209 for the power converter 201, the controller 204 and the sensors 205, 206.

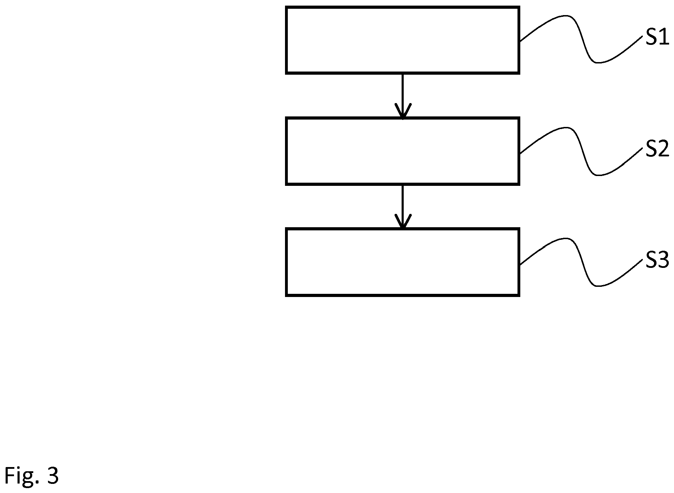

Fig. 3 shows a flow diagram of an embodiment of a method for supplying electrical power Pout to a load 212.

The method starts with providing electrical power Pout to the electric load 212 at a first of a number of different electrical voltage levels V1, V2 in step S1. During providing the output power Pout to the load 212 the voltage Vout of the provided electrical power Pout is monitored in step S2. Finally in step S3 the electrical power Pout is provided at the next higher voltage level V1, V2 if the monitored voltage Vout drops below a predetermined voltage threshold Vt1, Vt2 for the present voltage level V1, V2.

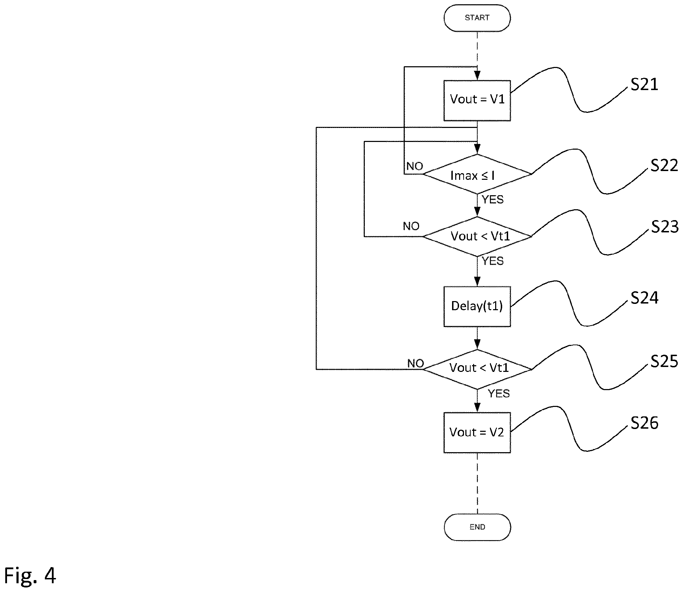

Fig. 4 shows a flow diagram of another embodiment of the method of Fig. 3.

In step S21, the electrical power Pout is also provided to the electric load 212 at a first of a number of different electrical voltage levels V1, V2.

To be sure that a voltage drop is caused by excessive power Pout drawn by the load 212 in step S22 the current I of the electrical power Pout is measured and e.g. compared to a maximum current Imax for the respective voltage level V1, V2.

In parallel or after measuring the current I in steps S22 the voltage Vout of the provided electrical power Pout is monitored in step S23.

Then if the measured current I is within a predetermined range of a maximum current value Imax and the voltage Vout is below the voltage threshold Vt1, Vt2 a time span t1 is counted in step S24, and the voltage Vout is measured again in step S25 after the time span t1.

Finally, in step S26 only if the measured voltage Vout is below the respective voltage threshold Vt1, Vt2 the electrical power Pout is provided at the next higher voltage level V1, V2.

Fig. 5 shows a voltage diagram which results of using an electrical power supply device 100, 200 according to the present invention.

The abscissa of the diagram shows the time t. The ordinate of the diagram shows the output Power Pout as well as a current I, and a voltage. The different curves of the diagram are specified by the legend.

It can be seen, that after initiating the transfer of power Pout to the load 212, the output power Pout immediately is provided with the first voltage level V1 and the current I continually raises from 0 to the value Imax(V1). It can also be seen that after reaching the maximum output power Pout for the voltage level V1 and shortly before reaching the maximum current Imax(V1) the voltage Vout starts to drop until it reaches the first voltage threshold Vt1. Starting at that moment, the time span t1 passes until any further action is performed.

After the time span t1 passes, the power converter 101, 201 switches to the next voltage level V2, which makes the total electrical power Pout increase, while at the same time, the current drawn by the load is reduced.

Not shown is that the charging controller 214 of the load 212 could detect the higher voltage V2 and increase the total amount of power drawn from the electrical power supply device 100, 200.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

For example, although USB applications have been primarily described above, the principles of the present invention can also be applied to e.g. charging systems for electrical vehicles or the like.

In summary, the present invention provides an electrical power supply device comprising a controllable power converter, with a power input which is connectable to a power source and with a power output, wherein the power converter is configured to controllably provide electrical power (Pout) at one of a number of different electrical voltage levels via the power output, and a controller, which is coupled to the power output and configured to monitor the voltage (Vout) at the power output, wherein if the monitored voltage (Vout) drops below a predetermined voltage threshold (Vt1, Vt2) for the present voltage level (V1, V2) the controller is configured to control the power converter to provide the electrical power (Pout) at the next higher voltage level (V1, V2). Furthermore, the present invention provides a respective method.

### List of reference signs

- 100; 200: electrical power supply device
- 101; 201: power converter
- 102; 202: power input
- 103; 203: power output
- 104; 204: controller
- 117; 217: mains
- 205: voltage sensor
- 206: current sensor
- 207: protection device
- 208: delay timer
- 209: ground
- 210, 213: connector
- 211: cable
- 212: load
- 214: charging controller
- 215: battery
- 216: ground
- 218, 219: power lines

- Pout: output power
- Vout: voltage
- V1, V2: electrical voltage levels
- Vt1, Vt2: voltage threshold
- I: current
- Imax: maximum current value
- t1: time span

- S1 - S3, S21 - S26: method steps

## Claims

1. Electrical power supply device (100; 200) comprising:
a controllable power converter (101; 201), with a power input (102; 202) which is connectable to a power source and with a power output (103; 203), wherein the power converter (101; 201) is configured to controllably provide electrical power (Pout) at one of a number of different electrical voltage levels (V1, V2) via the power output (103; 203), and
a controller (104; 204), which is coupled to the power output (103; 203) and configured to monitor the voltage (Vout) at the power output (103; 203),
wherein if the monitored voltage (Vout) drops below a predetermined voltage threshold (Vt1, Vt2) for the present voltage level (V1, V2) the controller (104; 204) is configured to control the power converter (101; 201) to provide the electrical power (Pout) at the next higher voltage level (V1, V2).

2. Electrical power supply device (100; 200) according to claim 1, wherein the controller (104; 204) comprises a voltage sensor (205).

3. Electrical power supply device (100; 200) according to any one of the preceding claims, wherein the controller (104; 204) comprises a current sensor (206) configured to measure the current (I) of the electrical power (Pout), and wherein the controller (104; 204) is configured to control the power converter (101; 201) to provide the electrical power (Pout) at the next higher voltage level (V1, V2) only if the measured current (I) is within a predetermined range of a maximum current value (Imax).

4. Electrical power supply device (100; 200) according to claim 3, wherein the controller (104; 204) is configured to control the power converter (101; 201) to switch back to a previous lower voltage level (V1, V2) and provide the electrical power (Pout) at the lover voltage level (V1, V2) if the measured current (I) decreases below a predetermined threshold value.

5. Electrical power supply device (100; 200) according to any one of the preceding claims 3 and 4, comprising a protection device (207), which is configured to at least temporarily shut down the power converter (101; 201) if after a change to a higher voltage level (V1, V2) the measured current (I) increases instantly.

6. Electrical power supply device (100; 200) according to any one of the preceding claims, wherein the controller (104; 204) comprises a delay timer (208), which is configured to measure a predetermined time span (t1) after the monitored voltage (Vout) drops below the predetermined voltage threshold (Vt1, Vt2), wherein the controller (104; 204) is configured to control the power converter (101; 201) to provide the electrical power (Pout) at the next higher voltage level (V1, V2) only if the monitored voltage (Vout) drops below the predetermined threshold (Vt1, Vt2) for the present voltage level (V1, V2) during the complete time span (t1).

7. Method for supplying electrical power (Pout) to an electric load (212), the method comprising the steps:
providing (S1, S21) electrical power (Pout) to the electric load (212) at a first of a number of different electrical voltage levels (V1, V2),
monitoring (S2, S23, S25) the voltage (Vout) of the provided electrical power (Pout), and
providing (S3, S26) the electrical power (Pout) at the next higher voltage level (V1, V2) if the monitored voltage (Vout) drops below a predetermined voltage threshold (Vt1, Vt2) for the present voltage level (V1, V2).

8. Method according to claim 7, further comprising measuring (S22) a current (I) of the electrical power (Pout), and providing the electrical power (Pout) at the next higher voltage level (V1, V2) only if the measured current (I) is within a predetermined range of a maximum current value (Imax).

9. Method according to claim 8, further comprising switching back to a previous lower voltage level (V1, V2), and providing the electrical power (Pout) at the lover voltage level (V1, V2) if the measured current (I) decreases below a predetermined current threshold (It) value.

10. Method according to any one of the preceding claims 7 to 9, further comprising at least temporarily shutting down the power converter (101; 201) if after a change to a higher voltage level (V1, V2) the measured current (I) increases instantly.

11. Method according to any one of the preceding claims 7 to 10, further comprising measuring (S24) a predetermined time span (t1) after the monitored voltage (Vout) drops below the predetermined voltage threshold (Vt1, Vt2), and providing the electrical power (Pout) at the next higher voltage level (V1, V2) only if the monitored voltage (Vout) drops below the predetermined voltage threshold (Vt1, Vt2) for the present voltage level (V1, V2) during the complete time span (t1).

## Patentansprüche

1. Stromversorgungsvorrichtung (100; 200), umfassend:
einen steuerbaren Leistungswandler (101; 201) mit einem Leistungseingang (102; 202), der mit einer Leistungsquelle verbindbar ist, und mit einem Leistungsausgang (103; 203), wobei der Leistungswandler (101; 201) dazu ausgestaltet ist, über den Leistungsausgang (103; 203) steuerbar Strom (Pout) mit einem einer Anzahl unterschiedlicher elektrischer Spannungspegel (V1, V2) bereitzustellen, und
eine Steuerung (104; 204), die mit dem Leistungsausgang (103; 203) gekoppelt und dazu ausgestaltet ist, die Spannung (Vout) an dem Leistungsausgang (103; 203) zu überwachen,
wobei, wenn die überwachte Spannung (Vout) unter einen vorgegebenen Spannungsschwellenwert (Vt1, Vt2) für den vorliegenden Spannungspegel (V1, V2) fällt, die Steuerung (104; 204) dazu ausgestaltet ist, den Leistungswandler (101; 201) dazu zu steuern, den Strom (Pout) mit dem nächsthöheren Spannungspegel (V1, V2) bereitzustellen.

2. Stromversorgungsvorrichtung (100; 200) nach Anspruch 1, wobei die Steuerung (104; 204) einen Spannungssensor (205) umfasst.

3. Stromversorgungsvorrichtung (100; 200) nach einem der vorhergehenden Ansprüche, wobei die Steuerung (104; 204) einen Stromstärkesensor (206) umfasst, der dazu ausgestaltet ist, die Stromstärke (I) des Stroms (Pout) zu messen, und wobei die Steuerung (104; 204) dazu ausgestaltet ist, den Leistungswandler (101; 201) dazu zu steuern, den Strom (Pout) nur dann mit dem nächsthöheren Spannungspegel (V1, V2) bereitzustellen, wenn die gemessene Stromstärke (I) innerhalb eines vorgegebenen Bereichs eines maximalen Stromstärkewerts (Imax) liegt.

4. Stromversorgungsvorrichtung (100; 200) nach Anspruch 3, wobei die Steuerung (104; 204) dazu ausgestaltet ist, den Leistungswandler (101; 201) dazu zu steuern, zurück zu einem vorherigen niedrigeren Spannungspegel (V1, V2) zu wechseln und den Strom (Pout) mit dem niedrigeren Spannungspegel (V1, V2) bereitzustellen, wenn die gemessene Stromstärke (I) unter einen vorgegebenen Schwellenwert abnimmt.

5. Stromversorgungsvorrichtung (100; 200) nach einem der vorhergehenden Ansprüche 3 und 4, die eine Schutzvorrichtung (207) umfasst, die dazu ausgestaltet ist, den Leistungswandler (101; 201) wenigstens zeitweilig abzuschalten, wenn nach einem Wechsel zu einem höheren Spannungspegel (V1, V2) die gemessene Stromstärke (I) sofort zunimmt.

6. Stromversorgungsvorrichtung (100; 200) nach einem der vorhergehenden Ansprüche, wobei die Steuerung (104; 204) einen Verzögerungszeitschalter (208) umfasst, der dazu ausgestaltet ist, eine vorgegebene Zeitspanne (t1) zu messen, nachdem die überwachte Spannung (Vout) unter den vorgegebenen Spannungsschwellenwert (Vt1, Vt2) fällt, wobei die Steuerung (104; 204) dazu ausgestaltet ist, den Leistungswandler (101; 201) dazu zu steuern, den Strom (Pout) nur dann mit dem nächsthöheren Spannungspegel (V1, V2) bereitzustellen, wenn die überwachte Spannung (Vout) während der gesamten Zeitspanne (t1) unter den vorgegebenen Schwellenwert (Vt1, Vt2) für den vorliegenden Spannungspegel (V1, V2) fällt.

7. Verfahren zur Versorgung einer elektrischen Last (212) mit Strom (Pout), wobei das Verfahren folgende Schritte umfasst:
Bereitstellen (S1, S2) von Strom (Pout) an die elektrische Last (212) mit einem ersten einer Anzahl unterschiedlicher elektrischer Spannungspegel (V1, V2),
Überwachen (S2, S23, S25) der Spannung (Vout) des bereitgestellten Stroms (Pout) und
Bereitstellen (S3, S26) des Stroms (Pout) mit dem nächsthöheren Spannungspegel (V1, V2), wenn die überwachte Spannung (Vout) unter einen vorgegebenen Spannungsschwellenwert (Vt1, Vt2) für den vorliegenden Spannungspegel (V1, V2) fällt.

8. Verfahren nach Anspruch 7, das ferner ein Messen (S22) einer Stromstärke (I) des elektrischen Stroms (Pout) und das Bereitstellen des Stroms (Pout) mit dem nächsthöheren Spannungspegel (V1, V2) nur dann, wenn die gemessene Stromstärke (I) innerhalb eines vorgegebenen Bereichs eines maximalen Stromstärkewerts (Imax) liegt, umfasst.

9. Verfahren nach Anspruch 8, das ferner ein Zurückwechseln zu einem vorherigen niedrigeren Spannungspegel (V1, V2) und ein Bereitstellen des Stroms (Pout) mit dem niedrigeren Spannungspegel (V1, V2) umfasst, wenn die gemessene Stromstärke (I) unter einen vorgegebenen Stromstärkeschwellenwert (It) abnimmt.

10. Verfahren nach einem der vorhergehenden Ansprüche 7 bis 9, das ferner ein wenigstens zeitweiliges Abschalten des Leistungswandlers (101; 201) umfasst, wenn nach einem Wechsel zu einem höheren Spannungspegel (V1, V2) die gemessene Stromstärke (I) sofort zunimmt.

11. Verfahren nach einem der vorhergehenden Ansprüche 7 bis 10, das ferner ein Messen (S24) einer vorgegebenen Zeitspanne (t1), nachdem die überwachte Spannung (Vout) unter den vorgegebenen Spannungsschwellenwert (Vt1, Vt2) fällt, und das Bereitstellen des Stroms (Pout) mit dem nächsthöheren Spannungspegel (V1, V2) nur dann, wenn die überwachte Spannung (Vout) während der gesamten Zeitspanne (t1) unter den vorgegebenen Spannungsschwellenwert (Vt1, Vt2) für den vorliegenden Spannungspegel (V1, V2) fällt, umfasst.

## Revendications

1. Dispositif d'alimentation en énergie électrique (100 ; 200) comprenant :
un convertisseur de courant (101 ; 201) pouvant être commandé, avec une entrée de courant (102 ; 202) qui peut être connectée à une source de courant et avec une sortie de courant (103 ; 203), dans lequel le convertisseur de courant (101 ; 201) est configuré pour fournir en pouvant être commandé, du courant électrique (Pout) à l'un de niveaux de tension électrique différents (V1, V2) par le biais de la sortie de courant (103 ; 203), et
une commande (104 ; 204) qui est couplée à la sortie de courant (103 : 203) et configurée pour commander la tension (Vout) à la sortie de courant (103 ; 203),
dans lequel si la tension (Vout) commandée tombe en-dessous d'un seuil de tension prédéterminé (Vt1, Vt2) pour le niveau de tension présent (V1, V2), la commande (104 ; 204) est configurée pour commander le convertisseur de courant (101 ; 201) pour fournir le courant électrique (Pout) au niveau de tension (V1, V2) supérieur suivant.

2. Dispositif d'alimentation en énergie électrique (100 ; 200) selon la revendication 1, dans lequel la commande (104 ; 204) comprend un capteur de tension (205).

3. Dispositif d'alimentation en énergie électrique (100 ; 200) selon la revendication 1 ou 2, dans lequel la commande (104 ; 204) comprend un capteur de courant (206) configuré pour mesurer le courant (I) du courant électrique (Pout), et dans lequel la commande (104 ; 204) est configurée pour commander le convertisseur de courant (101 ; 201) pour fournir le courant électrique (Pout) au niveau de tension (V1, V2) supérieur suivant uniquement si le courant mesuré (I) est situé dans une plage prédéterminée d'une valeur de courant maximale (Imax).

4. Dispositif d'alimentation en énergie électrique (100 ; 200) selon la revendication 3, dans lequel la commande (104 ; 204) est configurée pour commander le convertisseur de courant (101 ; 201) pour revenir à un niveau de tension (V1, V2) inférieur précédent et fournir le courant électrique (Pout) au niveau de tension (V1, V2) inférieur si le courant mesuré (I) baisse en-dessous d'une valeur seuil prédéterminée.

5. Dispositif d'alimentation en énergie électrique (100 ; 200) selon l'une quelconque des revendications précédentes 3 et 4, comprenant un dispositif de protection (207) qui est configuré pour couper le convertisseur de courant (101 ; 201) au moins temporairement si après un changement à un niveau de tension (V1, V2) supérieur, le courant mesuré (I) augmente instantanément.

6. Dispositif d'alimentation en énergie électrique (100 ; 200) selon l'une quelconque des revendications précédentes, dans lequel la commande (104 ; 204) comprend un minuteur de retard (208) qui est configuré pour mesurer une durée prédéterminée (t1) après que la tension (Vout) commandée tombe en-dessous du seuil de tension prédéterminé (Vt1, Vt2), dans lequel la commande (104 ; 204) est configurée pour commander le convertisseur de courant (101 ; 201) pour fournir le courant électrique (Pout) au niveau de tension (V1, V2) supérieur suivant uniquement si la tension commandée (Vout) tombe en-dessous du seuil de tension prédéterminé (Vt1, Vt2) pour le niveau de tension (V1, V2) présent pendant la durée (t1) complète.

7. Procédé d'alimentation en énergie électrique (Pout) à une charge électrique (212), le procédé comprenant les étapes :
de fournir (S1, S21) du courant électrique (Pout) à la charge électrique (212) à un premier de niveaux de tension électrique différents (V1, V2)
de gérer (S2, S23, S25) la tension (Vout) du courant électrique fourni (Pout), et
de fournir (S3, S26) le courant électrique (Pout) au niveau de tension (V1, V2) supérieur suivant si la tension commandée (Vout) tombe en-dessous d'un seuil de tension prédéterminé (Vt1, Vt2) pour le niveau de tension (V1, V2) présent.

8. Procédé selon la revendication 7, comprenant en outre de mesurer (S22) un courant (I) du courant électrique (Pout) et de fournir le courant électrique (Pout) au niveau de tension (V1, V2) supérieur suivant uniquement si le courant (I) mesuré est situé dans une plage prédéterminée d'une valeur de courant maximale (Imax) .

9. Procédé selon la revendication 8, comprenant en outre de revenir à un niveau de tension (V1, V2) inférieur précédent et de fournir le courant électrique (Pout) au niveau de tension (V1, V2) inférieur si le courant mesuré (I) baisse en-dessous d'une valeur seuil de courant (It) prédéterminée.

10. Procédé selon l'une des revendications précédentes 7 à 9, comprenant en outre de couper le convertisseur de courant (101 ; 201) au moins temporairement si après un changement à un niveau de tension (V1, V2) supérieur, le courant mesuré (I) augmente instantanément.

11. Procédé selon l'une des revendications précédentes 7 à 10, comprenant en outre de mesurer (524) une une durée prédéterminée (t1) après que la tension (Vout) commandée tombe en-dessous du seuil de tension prédéterminé (Vt1, Vt2), et de fournir le courant électrique (Pout) au niveau de tension (V1, V2) supérieur suivant uniquement si la tension commandée (Vout) tombe en-dessous du seuil de tension prédéterminé (Vt1, Vt2) pour le niveau de tension (V1, V2) présent pendant la durée (t1) complète.
